# FASCICULE DE BREVET EUROPEEN

(11) **EP 4 366 938 B1**
(45) Date de publication et mention de la délivrance du brevet: **23.04.2025**
(21) Numéro de dépôt: 22751775.2
(22) Date de dépôt: 06.07.2022
(51) Int. Cl.: B29C 70/46, B29C 70/54, B29C 33/00, B29C 33/04, B29C 33/30, B29C 43/14, B29C 43/36, B29C 43/52, B29C 51/08, B29C 51/36, B29C 51/30, B29C 51/42, B29C 35/04, B29C 35/08, B29C 35/02, B29C 33/02

(54) **PROCÉDÉ DE FABRICATION DE COMPOSITES THERMOPLASTIQUES**
VERFAHREN ZUR HERSTELLUNG VON THERMOPLASTISCHEN VERBUNDKUNSTSTOFFEN
METHOD OF FABRICATION OF THERMOPLASTIC COMPOSITE MATERIALS

(30) Priorité: 06.07.2021 FR 2107280
(43) Date de publication de la demande: 15.05.2024
(73) Titulaire: Centre technique industriel de la plasturgie et des composites, 01100 Bellignat (FR)
(72) Inventeur: GIRAUD, Damien, 73420 Voglans (FR)
(74) Mandataire: Germain Maureau
(86) Numéro de dépôt international: PCT/FR2022/051356
(87) Numéro de publication internationale: WO 2023/281217

(56) Documents cités:
- JP-A- 2004 148 398
- US-A- 5 139 407
- US-A1- 2011 017 386
- US-A1- 2020 016 852
- US-A1- 2020 180 240

## Description

La présente invention concerne un appareil de moulage, un système pour fabriquer des composites thermoplastiques et un procédé de fabrication de composites thermoplastiques.

Les procédés actuels permettant la fabrication de composites thermoplastiques à partir de textiles préimprégnés thermoplastiques reposent sur le principe de la thermocompression. La thermocompression comprend la mise sous pression les textiles préimprégnés thermoplastiques à haute température. Toutefois, le procédé de thermocompression a pour inconvénient d'avoir une productivité faible due notamment à un temps de cycle important. En effet, la vitesse de montée et descente en température dans ce procédé est très faible.

Il est connu de chauffer des textiles préimprégnés thermoplastiques par le biais de l'outillage. Différentes techniques de chauffage peuvent être utilisées incluant le chauffage par conduction, par convection ou par rayonnement. Le chauffage par conduction inclut le chauffage par céramique et par résistance électrique. Ce type de chauffage peut notamment être utilisé pour chauffer les plateaux d'une presse. Le chauffage par convection peut être réalisé à l'aide d'un fluide caloporteur. Le chauffage par rayonnement peut être réalisé par infrarouge, par microondes ou par induction.

Ces dernières décennies, divers procédés de fabrications, tels que l'injection thermoplastique ou l'estampage, des composites thermoplastiques ont été développés.

Généralement, une première étape consiste à fabriquer une plaque ou un laminé en consolidant des textiles imprégnés d'une résine ou matrice thermoplastique. En d'autres termes, la plaque ou le laminé est formé(e) dès lors que la résine ou matrice thermoplastique a pénétré le cœur des textiles. Le procédé d'estampage consiste ensuite à mettre en forme sous haute pression et à haute température la plaque ou le laminé dans une presse puis à refroidir celle-ci pour obtenir une structure cristalline appropriée et déterminante pour les propriétés mécaniques de la pièce en matériau composite. Cependant, l'estampage a pour inconvénient d'être onéreux et énergivore. Par ailleurs, le démoulage du matériau composite est réalisé à chaud ce qui engendre un risque de brûlure pour l'utilisateur et le refroidissement est effectué en dehors de l'outillage ce qui le rend difficilement contrôlable et répétable.

Le document EP2349667 divulgue un dispositif de moulage pour la transformation d'un matériau, comprenant :
- un corps de moule inférieur, ou matrice, réalisé en un matériau électriquement conducteur et comportant une zone moulante destinée à être en contact avec le matériau à transformer ;
- un corps de moule supérieur, ou poinçon, réalisé en un matériau électriquement conducteur; et comportant une zone moulante destinée à être en contact avec le matériau à transformer ;
- une pièce intermédiaire amovible, ou noyau, réalisée en un matériau électriquement conducteur, et intercalée entre la matrice et le poinçon ;
- des moyens inducteurs aptes à générer un champ magnétique enveloppant la matrice, le poinçon et la pièce intermédiaire ; ces trois éléments étant électriquement isolés deux à deux, afin que les faces en regard de la pièce intermédiaire et de la matrice d'une part, et, de la pièce intermédiaire et du poinçon d'autre part, délimitent deux entrefers dans lesquels circule le champ magnétique qui induit des courants à la surface des zones moulantes, de la matrice et du poinçon, permettant ainsi de localiser l'action des inducteurs à la surface des zones moulantes.

Le procédé divulgué dans le document EP2349667 utilisant le chauffage par induction est énergivore et complexe à mettre en place. Par ailleurs, la structure du dispositif de moulage, et en particulier de la pièce intermédiaire, ne permet pas la maitrise des dimensions du matériau à transformer, la diminution ces cycles de température et engendre une hétérogénéité du matériau à transformer. En effet, la diffusion de la chaleur dans le dispositif de moulage est hétérogène. Ainsi, la qualité des composites thermoplastiques peut être dégradée. Enfin, seules des pièces de faible épaisseur en composites thermoplastiques peuvent être fabriquées.

Le document US 5 139 407 A décrit un procédé de fabrication de composites thermoplastiques en utilisant un système pour fabriquer des composites thermoplastiques comprenant:
- un appareil de moulage comprenant
- une première flasque thermoconductrice et une deuxième flasque thermoconductrice, lesdites première et deuxième flasques thermoconductrices délimitant une cavité configurée pour recevoir des préimprégnés thermoplastiques,
- un moule thermoconducteur et thermorégulé par un fluide caloporteur comprenant une empreinte supérieure et une empreinte inférieure, lesdites empreintes supérieure et inférieure étant configurées pour recevoir lesdites première et deuxième flasques thermoconductrices, et
- une presse comprenant un plateau de presse supérieur sur lequel est fixé l'empreinte supérieure du moule thermorégulé et thermoconducteur et un plateau de presse inférieur sur lequel est fixé l'empreinte inférieure du moule thermorégulé et thermoconducteur le procédé de fabrication de composites thermoplastiques comprenant les étapes suivantes:
   - Provision de mats préimprégnés thermoplastiques comprenant des fibres et une matrice thermoplastique,
   - insertion des textiles préimprégnés thermoplastiques dans des première et deuxième flasques thermoconductrices,
   - transfert des flasques thermoconductrices dans une presse comprenant un moule isolant et des supports thermorégulé par un fluide caloporteur,
   - préchauffage des flasques thermoconductrices par le biais d'un système de chauffe direct des flasques,
   - pressage des flasques thermoconductrices,
   - transfert des flasques thermoconductrices dans une presse comprenant un moule thermoconducteur et thermorégulé par un fluide caloporteur,
   - refroidissement des flasques thermoconductrices dans ladite presse, - pressage des flasques thermoconductrices dans ladite presse,
   - extraction des flasques thermoconductrices de ladite presse et
   - démoulage des composites thermoplastiques.

L'invention a pour but de remédier aux inconvénients précités en proposant un appareil de moulage, un système pour fabriquer des pièces quasi-finies en composites thermoplastiques et un procédé de fabrication de pièces quasi-finies en composites thermoplastiques facilitant la mise en forme de textiles préimprégnés thermoplastiques. Par ailleurs, l'invention a pour but de proposer un appareil de moulage, un système pour fabriquer des pièces quasi-finies en composites thermoplastiques permettant d'optimiser le rendement énergétique du procédé de fabrication de pièces quasi-finies en composites thermoplastiques. Enfin, l'invention a pour but de proposer un appareil de moulage, un système pour fabriquer des pièces quasi-finies en composites thermoplastiques et un procédé de fabrication de pièces quasi-finies en composites thermoplastiques assurant une maitrise des dimensions des pièces en composites thermoplastiques, permettant une accélération de la mise en température, une homogénéisation de la température des textiles préimprégnés thermoplastiques, tout en conservant une haute qualité des composites thermoplastiques et en limitant la production de déchets.

L'invention a pour objet un appareil de moulage comprenant :
- Une première flasque thermoconductrice et une deuxième flasque thermoconductrice, lesdites première et deuxième flasques thermoconductrices délimitant une cavité configurée pour recevoir des textiles préimprégnés thermoplastiques,
- Un moule thermoconducteur et thermorégulé par un fluide caloporteur et comprenant une empreinte supérieure et une empreinte inférieure, lesdites empreintes supérieure et inférieure étant configurées pour recevoir lesdites première et deuxième flasques thermoconductrices.

L'appareil de moulage selon l'invention permet de faciliter la mise en forme des textiles préimprégnés thermoplastiques. En effet, l'empilement des textiles préimprégnés thermoplastiques est réalisé dans la cavité délimitée par une première et une deuxième flasques thermoconductrices légères dont la conductivité thermique est optimisée. Par ailleurs, le rendement énergétique du procédé de fabrication de composites thermoplastiques se trouve amélioré. En effet, l'appareil de moulage permet de diminuer l'énergie nécessaire à son utilisation d'une part, grâce la combinaison des première et deuxième flasques thermoconductrices avec le moule thermorégulé et thermoconducteur et d'autre part, grâce au fait que le moule est thermorégulé et thermoconducteur. Le moule est thermorégulé contrairement aux dispositifs de l'art antérieur dans laquelle le presse est généralement thermorégulée. Ceci a pour effet de concentrer plus rapidement et plus efficacement la chaleur autour des première et deuxième flasques thermoconductrices en évitant de chauffer les plateaux de presse de forte épaisseur qui ne diffusent qu'une partie de la chaleur. Le moule thermorégulé a pour effet d'assurer la recristallisation des composites thermoplastiques. En outre, les flasques thermoconductrices étant amovibles sont indépendantes du moule thermorégulé et thermoconducteur et de la presse ce qui a pour avantage une meilleure consolidation des textiles préimprégnés thermoplastiques tout en facilitant le procédé de fabrication de composites thermoplastiques. Le procédé de fabrication de composites thermoplastiques peut alors être mise en œuvre à l'échelle industrielle notamment en continu. De plus, les première et deuxième flasques thermoconductrices et le moule thermorégulé et thermoconducteur ont des dilations thermiques compatibles pour assurer une maitrise des dimensions des composites thermoplastiques.

Dans un mode de réalisation, lesdites première et deuxième flasques thermoconductrices ont une conductivité thermique supérieure à 30 W·m⁻¹·K⁻¹ et ledit moule thermoconducteur et thermorégulé par un fluide caloporteur a une conductivité thermique supérieure à 30 W·m⁻¹·K⁻¹. De préférence, lesdites première et deuxième flasques thermoconductrices ont une conductivité thermique supérieure à 49 ou supérieure à 55W·m⁻¹·K⁻¹. Dans ce mode de réalisation, les première et deuxième flasques thermoconductrices et le moule thermoconducteur et thermorégulé permettent d'assurer un transfert optimal de la chaleur et garantissent une homogénéité de la température au sein de celles-ci tout en conservant une qualité optimale des composites thermoplastiques.

Dans un mode de réalisation, lesdites première et deuxième flasques thermoconductrices sont en acier bruni, en aluminium ou en composite thermodurci. Par exemple, lesdites première et deuxième flasques thermoconductrices sont en composite comprenant des fibres de carbone longues et une matrice thermoplastique en BMI ou en composite comprenant des fibres de carbone coupées et une matrice thermoplastique en BMI tel qu'Hextool^{®}. De préférence, lesdites première et deuxième flasques thermoconductrices sont en acier bruni. Dans ce mode de réalisation, la conductivité thermique des première et deuxième flasques thermoconductrices est optimisée.

Dans un mode de réalisation, lesdites première et deuxième flasques thermoconductrices présentent une épaisseur comprise entre 1 et 15mm. De préférence, lesdites première et deuxième flasques thermoconductrices ont une épaisseur comprise entre 1 et 10mm et avantageusement entre 1 et 5mm. Dans ce mode de réalisation, le transfert thermique est améliorée de par la faible épaisseur de flasques thermoconductrices.

Dans un mode de réalisation, lesdites première et deuxième flasques thermoconductrices comprennent des moyens d'assemblage amovibles. Par exemple, les moyens d'assemblage amovibles sont des vis à butées. Dans ce mode de réalisation, l'assemblage des première et deuxième flasques thermoconductrices permet d'assurer le maintien et les propriétés des textiles préimprégnés thermoplastiques.

Dans un mode de réalisation, les moyens d'assemblage délimitent un entrefer entre lesdites première et deuxième flasques thermoconductrices. Dans ce mode de réalisation, il semble que les textiles préimprégnés thermoplastiques occupent la cavité délimitée par les flasques thermoconductrices de sorte à obtenir une pièce en composites thermoplastiques ayant la dimension désirée sans nécessité de découpe. Cette disposition permet d'assurer un remplissage complet de la cavité définie par les deux flasques car l'entrefer est effacé lors de l'étape de mise sous presse.

Dans un mode de réalisation, le moule thermorégulateur est en acier.

Dans un mode de réalisation, le fluide caloporteur est choisi parmi : l'eau ou l'huile.

L'invention a également pour objet un système pour fabriquer des composites thermoplastiques comprenant:
- L'appareil de moulage selon l'invention et
- Une presse comprenant un plateau de presse supérieur sur lequel est fixé l'empreinte supérieure du moule thermorégulé et thermoconducteur et un plateau de presse inférieur sur lequel est fixé l'empreinte inférieure du moule thermorégulé et thermoconducteur.

Le système pour fabriquer des composites thermoplastiques selon l'invention permet d'augmenter le rendement énergétique du procédé de fabrication de composites thermoplastiques tout en garantissant une haute qualité des composites thermoplastiques. En effet, le chauffage des flasques thermoconductrices est réalisé par le biais du moule thermoconducteur et thermorégulé ce qui permet d'éviter les pertes d'énergie et optimiser la diffusion de la chaleur dans les flasques thermoconductrices.

L'invention a enfin pour objet un procédé de fabrication de composites thermoplastiques en utilisant le système pour fabriquer des composites thermoplastiques selon l'invention comprenant les étapes suivantes :
A. Provision de textiles préimprégnés thermoplastiques comprenant des fibres et une matrice thermoplastique,
B. Insertion des textiles préimprégnés thermoplastiques dans des première et deuxième flasques thermoconductrices,
C. Transfert des flasques thermoconductrices dans une presse comprenant un moule thermoconducteur et thermorégulé par un fluide caloporteur,
D. Préchauffage des flasques thermoconductrices par le biais du moule dans ladite presse,
E. Pressage des flasques thermoconductrices,
F. Transfert des flasques thermoconductrices dans un four Infra-Rouge,
G. Chauffage des flasques thermoconductrices sous Infra-Rouge pour fusionner la matrice thermoplastique,
H. Transfert des flasques thermoconductrices dans une presse comprenant un moule thermoconducteur et thermorégulé par un fluide caloporteur,
I. Refroidissement des flasques thermoconductrices dans ladite presse,
J. Pressage des flasques thermoconductrices dans ladite presse,
K. Extraction des flasques thermoconductrices de ladite presse et
L. Démoulage des composites thermoplastiques.

Le procédé selon l'invention permet d'augmenter le rendement énergétique de celui-ci tout en diminuant le temps de cycle de fabrication des composites thermoplastiques. La productivité du procédé est alors améliorée. En effet, l'appareil de moulage et le système pour fabriquer des composites thermoplastiques permettent d'optimiser les cycles de chauffage et de refroidissement. Lors du préchauffage réalisé à l'étape D), les flasques thermoconductrices et le moule thermorégulé et thermoconducteur coopèrent de sorte à augmenter et homogénéiser la diffusion de la chaleur. Lors du chauffage réalisé à l'étape G), les flasques thermoconductrices sont chauffées sous Infra-Rouge pour favoriser la fusion de la matrice thermoplastique des textiles préimprégnés thermoplastiques. L'appareil de moulage permet de contrôler les phénomènes de dilatation et permet également d'optimiser le refroidissement réalisé à l'étape I) et ainsi la cristallisation de la matrice thermoplastique de composites thermoplastiques. Lors de l'étape L), le démoulage est réalisé à une température permettant de manipuler la pièce sans risque de brûlure pour l'utilisateur. Par ailleurs, le procédé propose des pièces quasi-finies en composites thermoplastiques prêtes à l'emploi, c'est-à-dire ne nécessitant peu ou pas de découpe. En effet, les flasques thermoconductrices sont préalablement dimensionnées de sorte à obtenir la pièce en composites thermoplastiques désirée. En outre, la ou les presses utilisé(e)s dans le procédé sont des presses conventionnelles ce qui permet de diminuer les coûts de production. De plus, une grande variété de composites thermoplastiques peuvent être produits rapidement et efficacement. En effet, les flasques thermoconductrices peuvent aisément varier en terme notamment d'épaisseur, de forme et de motifs. Le procédé selon l'invention assure la reproductibilité des pièces, est peu coûteux et permet d'optimiser la mise en forme des pièces quasi-finies.

Par exemple, dans l'étape A), les textiles préimprégnés thermoplastiques comprennent des fibres choisies parmi : des fibres courtes ou continues, des fibres naturelles, des fibres organiques ou minérales, Par exemple, les fibres sont choisies parmi : des fibres de basalte, des fibres de carbone, des fibres de verre. Par exemple, dans l'étape A), la matrice thermoplastique est composée de : polyoléfines, polycarbonates, polyamides, polystyrènes, polyesters et/ou polyaryléthercétones. Par exemple, la matrice thermoplastique en polysulfure de phénylène, une matrice thermoplastique en polyéthylène, une matrice thermoplastique en poly(téréphtalate d'éthylène).

Dans un mode de réalisation, dans l'étape D), le préchauffage du moule est réalisé par convection ou par conduction. Le chauffage par conduction inclut le chauffage par céramique et par résistance électrique. Le chauffage par convection peut être réalisé à l'aide d'un fluide caloporteur. Dans ce mode de réalisation, le diffusion thermique est améliorée.

Dans un mode de réalisation, dans l'étape D), le préchauffage du moule est réalisé à une température comprise entre 50 et 150°C. Contrairement à l'art antérieur dans lequel les presses sont généralement chauffées à des températures avoisinant les 350°C, il semble que dans ce mode de réalisation les flasques thermoconductrices et le moule thermoconducteur et thermorégulé parviennent à optimiser le rendement énergétique notamment en diminuant considérablement la température de préchauffage. En effet, le moule thermoconducteur est chauffé de sorte à diffuser la chaleur vers les flasques thermoconductrices ce qui a pour effet d'augmenter le transfert de la chaleur sans perte énergétique.

Dans un mode de réalisation, dans l'étape D), le préchauffage est réalisé pendant 1 à 10min. Dans ce mode de réalisation, il semble que la diffusion de la chaleur avec l'appareil de moulage est efficace ce qui a pour effet de diminuer le temps de chauffe et ainsi augmenter la productivité tout en optimisant le rendement énergétique.

Dans un mode de réalisation, dans les étapes E) et/ou J), le pressage est réalisé à une pression comprise entre 10.10⁶ et 60.10⁶ Pa.

Dans un mode de réalisation, le procédé comprend une étape M) réalisée après l'étape E) ou après l'étape J) incluant la mise sous vide des première et deuxième flasques thermoconductrices. Dans ce mode de réalisation, la mise sous vide permet d'améliorer la pénétration de la matrice thermoplastique fondue dans les fibres. Par ailleurs, la mise sous vide permet de maintenir l'orientation des fibres inclues dans les textiles préimprégnés thermoplastiques, d'éviter l'oxydation de la matrice thermoplastique, d'évacuer d'éventuelles contaminations et d'éviter le délaminage des textiles préimprégnés thermoplastiques lors de la mise en forme. Enfin, la mise sous vide maintient la matrice thermoplastique fluidifiée.

Dans un mode de réalisation, un joint est inséré entre lesdites première et deuxième flasques thermoconductrices. Par exemple, le joint est thermorésistant. Par exemple, le joint présente un facteur de compression compris entre 0.1 et 10mm, de préférence entre 0.1 et 5mm, et avantageusement entre 0.1 et 3mm.

Dans un mode de réalisation, dans l'étape G), les première et deuxième flasques thermoconductrices sont chauffées à la température de fusion de la matrice thermoplastique des textiles préimprégnés thermoplastiques.

Dans un mode de réalisation, dans l'étape G), le chauffage des première et deuxième flasques thermoconductrices est réalisée pendant 5 à 15min. Dans ce mode de réalisation, l'étape de préchauffage D) et les flasques thermoconductrices permettent de réduire le temps de chauffage.

Dans un mode de réalisation, dans l'étape I), les première et deuxième flasques thermoconductrices sont refroidies à une température inférieure d'au moins 10°C à la température de transition vitreuse de la matrice thermoplastique. Dans ce mode réalisation, l'utilisateur peut manipuler les première et deuxième flasques thermoconductrices sans aucun risque de brûlure.

Dans un mode de réalisation, dans l'étape I), le refroidissement est réalisé pendant 1 à 10min.

Dans un mode de réalisation, les textiles préimprégnés thermoplastiques comprennent des composants électroniques à base de composés inorganiques ou de composés organiques. Par exemple, les composants électroniques sont choisis parmi : une étiquette de communication en champ proche ou une étiquette radio-identification. Dans ce mode de réalisation, les composites thermoplastiques peuvent être aisément tracés par l'utilisateur.

Dans un mode de réalisation, une seule presse est utilisée lors des étapes C) et H). En d'autres termes, la même presse est utilisée dans les étapes C) et H).

Dans un mode de réalisation, deux presses distinctes sont utilisées lors des étapes C) et H). En d'autres termes, une première presse est utilisée lors de l'étape C) et une deuxième presse est utilisée lors de l'étape H). Dans ce mode de réalisation, le procédé permet de fabriquer des pièces en continue à l'échelle industrielle.

L'invention sera mieux comprise, grâce à la description ci-après, qui se rapporte à un ou plusieurs modes de réalisation selon la présente invention, donné à titre d'exemples non limitatifs et expliqués avec référence aux dessins schématiques annexés, dans lesquels :
[Fig. 1] est un vue d'ensemble d'un système pour fabriquer des composites thermoplastiques selon l'invention,
[Fig. 2] est une vue latérale d'un système pour fabriquer des composites thermoplastiques selon l'invention,
[Fig. 3] est une vue schématique du procédé de fabrication de composites thermoplastiques selon l'invention,
[Fig. 4] est une vue d'ensemble d'une partie du procédé de fabrication de composites thermoplastiques selon l'invention,
[Fig. 5] est une vue d'ensemble d'une partie du procédé de fabrication de composites thermoplastiques selon l'invention,
[Fig. 6] est une vue d'ensemble d'une partie du procédé de fabrication de composites thermoplastiques selon l'invention,
[Fig. 7] est une vue d'ensemble d'une partie du procédé de fabrication de composites thermoplastiques selon l'invention,
[Fig. 8] est une vue d'ensemble d'une partie du procédé de fabrication de composites thermoplastiques selon l'invention,
[Fig. 9] est une vue d'ensemble d'une partie du procédé de fabrication de composites thermoplastiques selon l'invention,
[Fig. 10] est une vue d'ensemble d'une partie du procédé de fabrication de composites thermoplastiques selon l'invention,
[Fig. 11] est une vue d'ensemble d'une partie du procédé de fabrication de composites thermoplastiques selon l'invention,
[Fig. 12] est une vue d'ensemble d'une partie du procédé de fabrication de composites thermoplastiques selon l'invention et
[Fig. 13] est une vue d'ensemble d'une partie du procédé de fabrication de composites thermoplastiques selon l'invention.

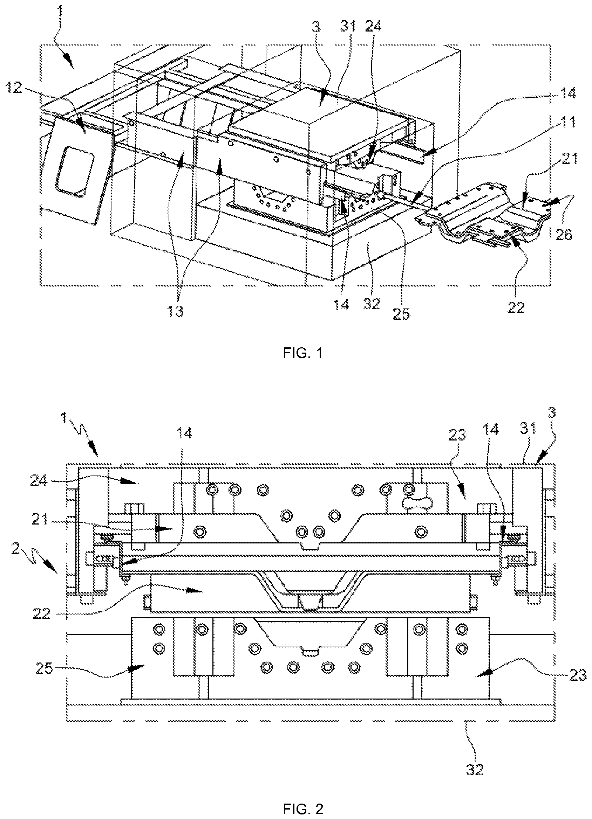

Les Figures 1 et 2 illustrent un système 1 pour fabriquer des composites thermoplastiques comprenant :
- Un appareil de moulage 2 et
- Une presse 3 comprenant un plateau de presse supérieur 31 et un plateau de presse inférieur 32.

L'appareil de moulage 2 comprend une première flasque thermoconductrice 21 et une deuxième flasque thermoconductrice 22, lesdites première 21 et deuxième 22 flasques thermoconductrices délimitant une cavité configurée pour recevoir des textiles préimprégnés thermoplastiques. Les première 21 et deuxième 22 flasques thermoconductrices présentent une conductivité thermique supérieure à 30 W·m⁻¹·K⁻¹ et de préférence supérieure à 49 ou supérieure à 55 W·m⁻¹·K⁻¹.

Les première 21 et deuxième 22 flasques thermoconductrices sont par exemple en acier bruni, en aluminium ou en composite thermodurci. De préférence, lesdites première et deuxième flasques thermoconductrices sont en acier bruni ce qui pour effet d'augmenter la conductivité thermique.

L'appareil de moulage 2 comprend en outre un moule thermorégulé et thermoconducteur 23 comprenant une empreinte supérieure 24 et une empreinte inférieure 25 et ayant une conductivité thermique supérieure à 30 W·m⁻¹·K⁻¹, lesdites empreintes supérieure 24 et inférieure 25 étant configurées pour recevoir lesdites première 21 et deuxième 22 flasques thermoconductrices.

Par exemple, les première 21 et deuxième 22 flasques thermoconductrices ont une épaisseur comprise entre 1 et 15mm. Ainsi, les flasques thermoconductrices sont légères et présentent une conductivité thermique améliorée.

Les première 21 et deuxième 22 flasques thermoconductrices peuvent comprendre des moyens d'assemblage amovibles. Par exemple, les moyens d'assemblage amovibles sont des vis à butées 26.

Le moule thermorégulé et thermoconducteur 23 est de préférence en acier. Le moule thermorégulé et thermoconducteur 23 est de préférence régulé par le biais d'un fluide caloporteur, par exemple l'eau.

L'empreinte supérieure 24 du moule thermorégulé et thermoconducteur 23 est fixé sur le plateau de presse supérieur 31 de la presse 3 et l'empreinte inférieure 25 du moule thermorégulé et thermoconducteur 23 est fixé sur le plateau de presse inférieure 32. Les première 21 et deuxième 22 flasques thermoconductrices sont amovibles, c'est-à-dire indépendantes du moule thermorégulé et thermoconducteur 23 et de la presse 3.

Dans cet exemple, le système 1 comprend un dispositif de mise sous vide 11.

Dans cet exemple, le système 1 comprend en outre un cadre de transfert 12 qui permet de transférer les première 21 et deuxième 22 flasques thermoconductrices, des supports de guidage latéraux 13 sur lesquels sont fixés des rails de guidage 14 qui permettent de guider les première 21 et deuxième 22 thermoconductrices et le cadre de transfert 12.

Le procédé de fabrication de composites thermoplastiques en utilisant le système 1 pour fabriquer des composites thermoplastiques comprend une étape A) dans laquelle des textiles préimprégnés thermoplastiques comprenant des fibres et une matrice thermoplastique sont fournis.

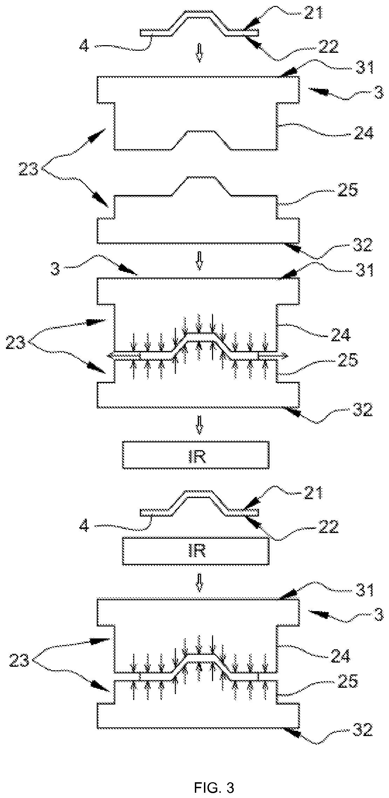

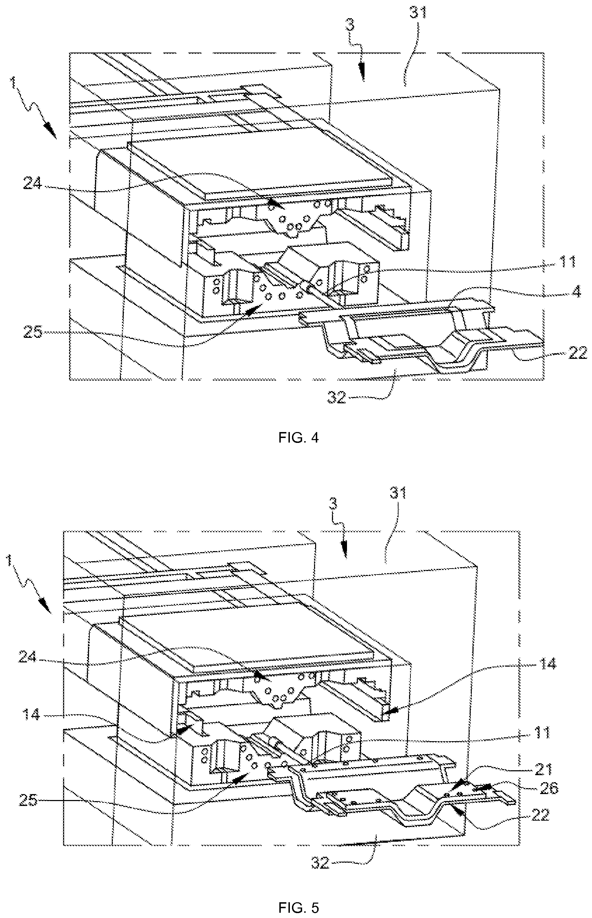

Les Figures 3 et 4 illustrent l'étape B) dans laquelle les textiles préimprégnés thermoplastiques 4 sont insérés dans des première 21 et deuxième 22 flasques thermoconductrices. A cet effet, les textiles préimprégnés thermoplastiques 4 peuvent être déposés sur la deuxième flasque 22 thermoconductrice. La première flasque 21 peut ensuite être déposée sur la deuxième flasque 22 thermoconductrice de sorte délimiter une cavité configurée pour recevoir les textiles préimprégnés thermoplastiques 4. Les première 21 et deuxième 22 flasques thermoconductrices peuvent ensuite être assemblés avec des vis à butées 26 (Figure 5).

Par exemple, dans l'étape A), les textiles préimprégnés thermoplastiques 4 comprennent des fibres choisies parmi : des fibres courtes ou continues, des fibres naturelles, des fibres organiques ou minérales, Par exemple, les fibres sont choisies parmi : des fibres de basalte, des fibres de carbone, des fibres de verre. Par exemple, dans l'étape A), la matrice thermoplastique est composée de : polyoléfines, polycarbonates, polyamides, polystyrènes, polyesters et/ou polyarylethercetones. Par exemple, la matrice thermoplastique en polysulfure de phénylène, une matrice thermoplastique en polyéthylène, une matrice thermoplastique en poly(téréphtalate d'éthylène).

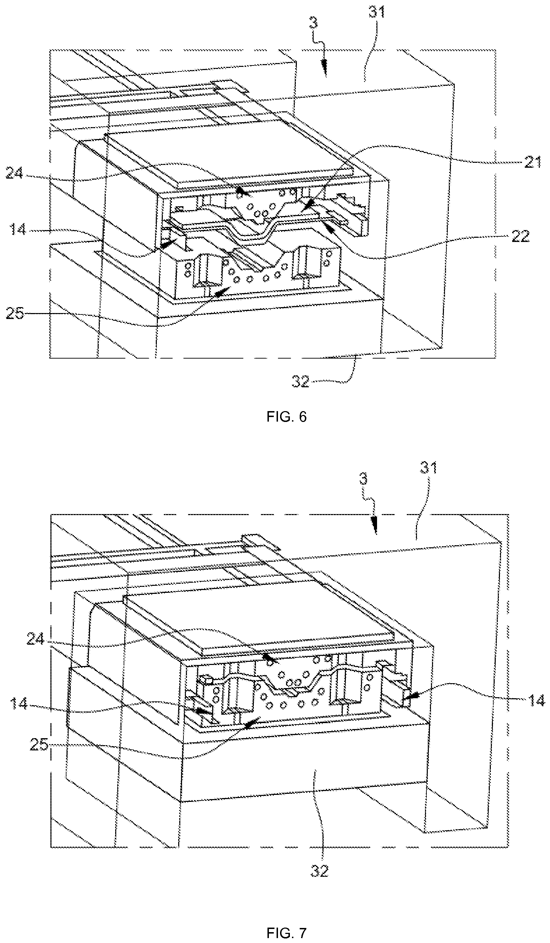

La Figure 6 illustre l'étape C) dans laquelle les première 21 et deuxième 22 flasques thermoconductrices sont transférées dans la presse 3. A cet effet, les première 21 et deuxième 22 flasques thermoconductrices disposées sur les rails 14.

Les Figures 3 et 7 illustrent l'étape D) dans laquelle les première 21 et deuxième 22 flasques thermoconductrices sont préchauffées par le biais du moule 23 dans ladite presse 3. Le préchauffage du moule 23 peut être réalisé par convection ou par conduction à une température comprise entre 50 et 150°C et par exemple à une température de 100°C. Le préchauffage peut être réalisé pendant 1 à 10min et par exemple, pendant 5min.

Les Figures 3 et 7 illustrent également l'étape E) dans laquelle les première 21 et deuxième 22 flasques thermoconductrices sont pressées. Le pressage peut être réalisé à une pression comprise entre 10.10⁶ et 60.10⁶ Pa et par exemple à une pression égale à 15.10⁶ Pa.

La Figure 7 illustre également l'étape M) pouvant être réalisée après l'étape E) incluant la mise sous vide des première 21 et deuxième 22 flasques thermoconductrices à l'aide du dispositif de mise sous vide 11. Par exemple, un joint thermorésistant est inséré entre lesdites première 21 et deuxième 22 flasques thermoconductrices. Le joint peut présenter un facteur de compression compris entre 0.1 et 3mm et par exemple un facteur de compression de 1.5mm.

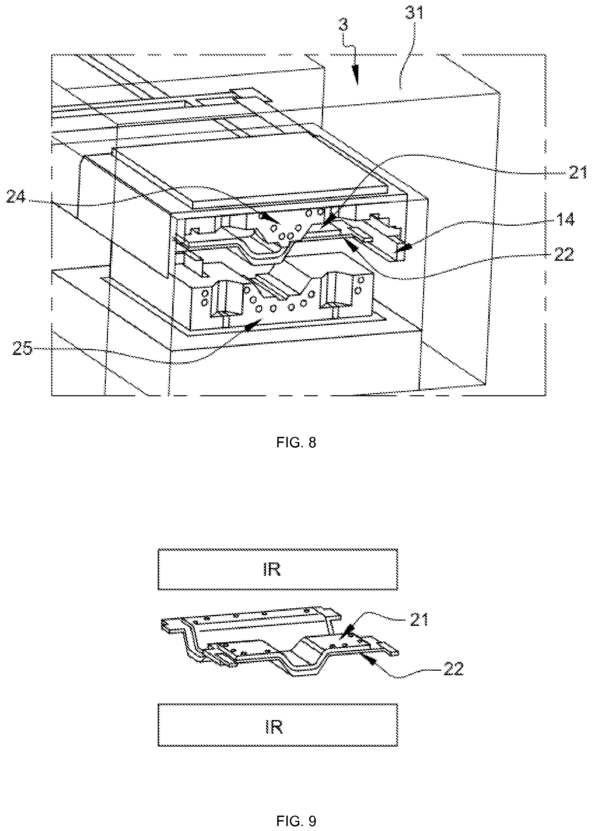

La Figure 8 illustre l'ouverture de la presse 3. Les première 21 et deuxième 22 flasques thermoconductrices peuvent être ensuite déposées sur le cadre de transfert 12 (Figure 1). Dans une étape F), les première 21 et deuxième 22 flasques thermoconductrices sont transférées dans un four Infra-Rouge IR.

Les Figures 3 et 9 illustrent l'étape G) dans laquelle les première 21 et deuxième 22 flasques thermoconductrices sont chauffées dans un four Infra-Rouge IR. Par exemple, les première 21 et deuxième flasques thermoconductrices sont chauffées à la température de fusion de la matrice thermoplastique des textiles préimprégnés thermoplastiques. Le chauffage des première 21 et deuxième 22 flasques thermoconductrices peut être réalisé pendant 5 à 15min ou par exemple pendant 8min.

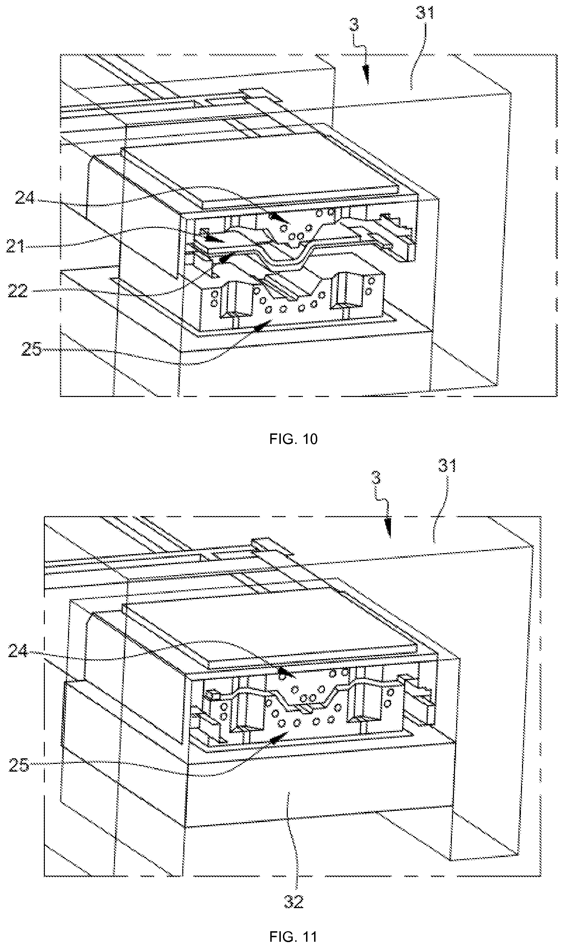

La Figure 10 illustre l'ouverture de la presse 3. Les première 21 et deuxième 22 flasques thermoconductrices peuvent être ensuite déposées sur le cadre de transfert 12 (Figure 1). Dans une étape H), les première 21 et deuxième 22 flasques thermoconductrices sont transférées dans la presse 3.

Les Figures 3 et 11 illustrent l'étape I) dans laquelle les première 21 et deuxième 22 flasques thermoconductrices sont refroidies. Par exemple, les première 21 et deuxième 22 flasques thermoconductrices sont refroidies à une température inférieure d'au moins 10°C à la température de transition vitreuse de la matrice thermoplastique. Le refroidissement peut être réalisé pendant 1 à 10min ou par exemple pendant 6min.

Les Figures 3 et 11 illustrent également l'étape J) dans laquelle les première 21 et deuxième 22 flasques thermoconductrices sont pressées. Le pressage peut être réalisé à une pression comprise entre 10.10⁶ et 60.10⁶ Pa et par exemple à une pression égale à 15.10⁶ Pa.

La Figure 11 illustre également l'étape M) pouvant être réalisée après l'étape J) incluant la mise sous vide des première 21 et deuxième 22 flasques thermoconductrices à l'aide du dispositif de mise sous vide 11. Par exemple, un joint thermorésistant est inséré entre lesdites première 21 et deuxième 22 flasques thermoconductrices. Le joint peut présenter un facteur de compression compris entre 0.1 et 3mm et par exemple un facteur de compression de 1.5mm.

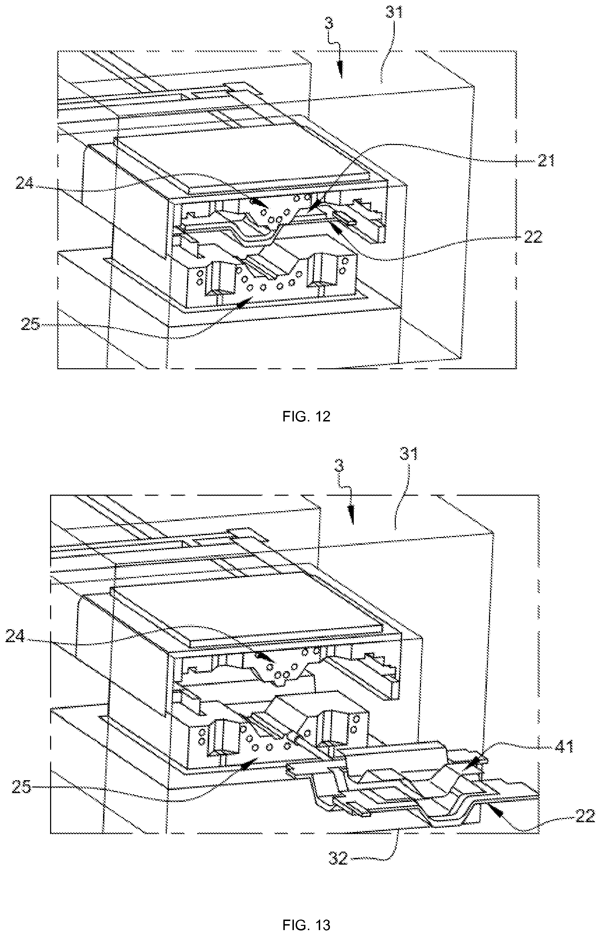

La Figure 12 illustre l'ouverture de la presse 3 lorsque le refroidissement est terminé.

La Figure 13 illustre l'étape K) dans laquelle les première 21 et deuxième 22 flasques thermoconductrices sont extraites de la presse 3. Après avoir retiré la première flasque thermoconductrice 21, les composites thermoplastiques 41 peuvent être démoulés. Par exemples, l'épaisseur de la pièce en composites thermoplastiques est comprise entre 1 et 50mm, de préférence entre 1 et 10 mm et est par exemple de 2mm.

Lors de la mise en œuvre du procédé selon l'invention, deux presses distinctes peuvent utilisées lors des étapes C) et H).

L'appareil de moulage selon l'invention facilite la mise en forme des textiles préimprégnés thermoplastiques. Par ailleurs, le rendement énergétique du procédé de fabrication de composites thermoplastiques est amélioré. En outre, les flasques thermoconductrices amovibles permettent une meilleure consolidation des textiles préimprégnés thermoplastiques tout en facilitant le procédé de fabrication de composites thermoplastiques. Le procédé de fabrication de composites thermoplastiques peut être mise en œuvre à l'échelle industrielle notamment en continu. De plus, les première et deuxième flasques thermoconductrices et le moule thermorégulé et thermoconducteur ont des dilations thermiques compatibles pour assurer une maitrise des dimensions des composites thermoplastiques. Enfin, les première et deuxième flasques thermoconductrices permettent d'assurer un transfert optimal de la chaleur et garantissent une homogénéité de la température au sein de celles-ci tout en conservant une qualité optimale des composites thermoplastiques.

## Revendications

1. Procédé de fabrication de composites thermoplastiques (41) en utilisant un système (1) pour fabriquer des composites thermoplastiques comprenant :
- un appareil de moulage (2) comprenant une première flasque thermoconductrice (21) et une deuxième flasque thermoconductrice (22), lesdites première (21) et deuxième (22) flasques thermoconductrices délimitant une cavité configurée pour recevoir des textiles préimprégnés thermoplastiques (4), et un moule thermoconducteur et thermorégulé par un fluide caloporteur (23) comprenant une empreinte supérieure (24) et une empreinte inférieure (25), lesdites empreintes supérieure (24) et inférieure (25) étant configurées pour recevoir lesdites première (21) et deuxième (22) flasques thermoconductrices, et
- une presse (3) comprenant un plateau de presse supérieur (31) sur lequel est fixé l'empreinte supérieure (24) du moule thermorégulé et thermoconducteur (23) et un plateau de presse inférieur (32) sur lequel est fixé l'empreinte inférieure (25) du moule thermorégulé et thermoconducteur (23)
le procédé de fabrication de composites thermoplastiques comprenant les étapes suivantes :
A. Provision de textiles préimprégnés thermoplastiques (4) comprenant des fibres et une matrice thermoplastique,
B. Insertion des textiles préimprégnés thermoplastiques (4) dans des première (21) et deuxième (22) flasques thermoconductrices,
C. Transfert des flasques thermoconductrices (21, 22) dans une presse (3) comprenant un moule thermoconducteur et thermorégulé par un fluide caloporteur (23),
D. Préchauffage des flasques thermoconductrices (21, 22) par le biais du moule dans ladite presse,
E. Pressage des flasques thermoconductrices (21, 22),
F. Transfert des flasques thermoconductrices (21, 22) dans un four Infra-Rouge (IR),
G. Chauffage des flasques thermoconductrices (21, 22) sous Infra-Rouge pour fusionner la matrice thermoplastique,
H. Transfert des flasques thermoconductrices (21, 22) dans une presse (3) comprenant un moule thermoconducteur et thermorégulé par un fluide caloporteur (23),
I. Refroidissement des flasques thermoconductrices (21, 22) dans ladite presse (3),
J. Pressage des flasques thermoconductrices (21, 22) dans ladite presse (3),
K. Extraction des flasques thermoconductrices (21, 22) de ladite presse (3) et
L. Démoulage des composites thermoplastiques (41).

2. Procédé de fabrication de composites thermoplastiques selon la revendication 1, dans lequel dans l'étape D), le préchauffage du moule (23) est réalisé par convection ou par conduction.

3. Procédé de fabrication de composites thermoplastiques selon la revendication 1 ou 2, dans lequel dans l'étape D), le préchauffage du moule (23) est réalisé à une température comprise entre 50 et 150°C.

4. Procédé de fabrication de composites thermoplastiques selon l'une quelconque des revendications 1 à 3, dans lequel dans les étapes E) et/ou J), le pressage est réalisé à une pression comprise entre 10.10⁶ et 60.10⁶ Pa.

5. Procédé de fabrication de composites thermoplastiques selon l'une quelconque des revendications 1 à 4, comprenant une étape M) réalisée après l'étape E) ou J), incluant la mise sous vide des première et deuxième (21, 22) flasques thermoconductrices.

6. Procédé de fabrication de composites thermoplastiques selon la revendication 5, dans laquelle un joint est inséré entre lesdites première (21) et deuxième (22) flasques thermoconductrices.

7. Procédé de fabrication de composites thermoplastiques selon l'une quelconque des revendications 1 à 6 dans lequel dans l'étape G), les première (21) et deuxième (22) flasques thermoconductrices sont chauffées à la température de fusion de la matrice thermoplastique des textiles préimprégnés thermoplastiques (4).

8. Procédé de fabrication de composites thermoplastiques selon l'une quelconque des revendications 1 à 7, dans lequel dans l'étape I), les première (21) et deuxième (22) flasques thermoconductrices sont refroidies à une température inférieure d'au moins 10°C à la température de transition vitreuse de la matrice thermoplastique.

9. Procédé de fabrication de composites thermoplastiques selon l'une quelconque des revendications 1 à 8, dans lequel les textiles préimprégnés thermoplastiques (4) comprennent des composants électroniques à base de composés inorganiques ou de composés organiques.

10. Procédé de fabrication de composite thermoplastique selon l'une quelconque des revendications 1 à 9, dans lequel lesdites première (21) et deuxième (22) flasques thermoconductrices ont une conductivité thermique supérieure à 30 W·m⁻¹·K⁻¹ et ledit moule thermoconducteur et thermorégulé par un fluide caloporteur (23) a une conductivité thermique supérieure à 30 W·m⁻¹·K⁻¹.

11. Procédé de fabrication de composite thermoplastique selon l'une quelconque des revendications 1 à 10, dans lequel lesdites première (21) et deuxième (22) flasques thermoconductrices sont en acier bruni, en aluminium ou en composite thermodurci.

12. Procédé de fabrication de composite thermoplastique selon l'une quelconque des revendications 1 à 11, dans lequel lesdites première (21) et deuxième (22) flasques thermoconductrices comprennent des moyens d'assemblage amovibles.

## Patentansprüche

1. Verfahren zur Herstellung thermoplastischer Verbundwerkstoffe (41) unter Verwendung eines Systems (1) zur Herstellung thermoplastischer Verbundwerkstoffe, umfassend:
- eine Formvorrichtung (2), die einen ersten wärmeleitenden Flansch (21) und einen zweiten wärmeleitenden Flansch (22) umfasst, wobei die ersten (21) und zweiten (22) wärmeleitenden Flansche einen Hohlraum begrenzen, der für die Aufnahme von thermoplastischen vorimprägnierten Textilien (4) eingerichtet ist, und eine wärmeleitende und durch ein Wärmeträgerfluid (23) thermoregulierte Form, die einen oberen Abdruck (24) und einen unteren Abdruck (25) umfasst, wobei die oberen (24) und unteren Abdrücke (25) so eingerichtet sind, dass sie die ersten (21) und zweiten (22) wärmeleitenden Flansche aufnehmen, und
- eine Presse (3), die eine obere Pressplatte (31), an der der obere Abdruck (24) der thermoregulierten und wärmeleitenden Form (23) befestigt ist, und eine untere Pressplatte (32), an der der untere Abdruck (25) der wärmegeregelten und wärmeleitenden Form (23) befestigt ist, umfasst
Verfahren zur Herstellung thermoplastischer Verbundwerkstoffe, das folgende Schritte umfasst:
A. Bereitstellung von thermoplastischen vorimprägnierten Textilien (4), die Fasern und eine thermoplastische Matrix umfassen,
B. Einlegen der thermoplastischen vorimprägnierten Textilien (4) in die ersten (21) und zweiten (22) wärmeleitenden Flansche,
C. Transfer der wärmeleitenden Flansche (21, 22) in eine Presse (3), die eine wärmeleitende Form umfasst, die durch ein Wärmeträgerfluid (23) thermoreguliert wird.
D. Vorwärmen der wärmeleitenden Flansche (21, 22) durch die Form in der Presse,
E. Pressen der wärmeleitenden Flansche (21, 22),
F. Transfer der wärmeleitenden Flansche (21, 22) in einen Infrarotofen (IR),
G. Erhitzen der wärmeleitenden Flansche (21, 22) unter Infrarot, um die thermoplastische Matrix zu verschmelzen,
H. Transfer der wärmeleitenden Flansche (21, 22) in eine Presse (3), die eine wärmeleitende und durch ein Wärmeträgerfluid (23) thermoregulierte Form umfasst,
I. Kühlung der wärmeleitenden Flansche (21, 22) in der Presse (3),
J. Pressen der wärmeleitenden Flansche (21, 22) in der Presse (3),
K. Herausnehmen der wärmeleitenden Flansche (21, 22) aus der Presse (3) und
L. Entformen von thermoplastischen Verbundwerkstoffen (41).

2. Verfahren zur Herstellung von thermoplastischen Verbundwerkstoffen nach Anspruch 1, wobei in Schritt D) das Vorwärmen der Form (23) durch Konvektion oder Leitung erfolgt.

3. Verfahren zur Herstellung von thermoplastischen Verbundwerkstoffen nach Anspruch 1 oder 2, wobei in Schritt D) das Vorwärmen der Form (23) bei einer Temperatur zwischen 50 und 150 °C durchgeführt wird.

4. Verfahren zur Herstellung thermoplastischer Verbundwerkstoffe nach einem der Ansprüche 1 bis 3, wobei in den Schritten E) und/oder J) das Pressen bei einem Druck zwischen 10,10⁶ und 60,10⁶ Pa erfolgt.

5. Verfahren zur Herstellung thermoplastischer Verbundwerkstoffe nach einem der Ansprüche 1 bis 4, umfassend einen Schritt M), der nach Schritt E) oder J) durchgeführt wird, einschließlich Vakuumieren des ersten und zweiten (21, 22) wärmeleitenden Flanschs.

6. Verfahren zur Herstellung von thermoplastischen Verbundwerkstoffen nach Anspruch 5, wobei eine Dichtung zwischen den ersten (21) und zweiten (22) wärmeleitenden Flanschen eingefügt ist.

7. Verfahren zur Herstellung thermoplastischer Verbundwerkstoffe nach einem der Ansprüche 1 bis 6, wobei in Schritt G) die ersten (21) und zweiten (22) wärmeleitenden Flansche auf die Schmelztemperatur der thermoplastischen Matrix der thermoplastischen vorimprägnierten Textilien (4) erhitzt werden.

8. Verfahren zur Herstellung thermoplastischer Verbundwerkstoffe nach einem der Ansprüche 1 bis 7, wobei in Schritt I) die ersten (21) und zweiten (22) wärmeleitenden Flansche auf eine Temperatur abgekühlt werden, die mindestens 10 °C unter der Glasübergangstemperatur der thermoplastischen Matrix liegt.

9. Verfahren zur Herstellung thermoplastischer Verbundstoffe nach einem der Ansprüche 1 bis 8, wobei die thermoplastischen vorimprägnierten Textilien (4) elektronische Komponenten auf Basis anorganischer Verbindungen oder organischer Verbindungen umfassen.

10. Herstellungsverfahren für thermoplastische Verbundwerkstoffe nach einem der Ansprüche 1 bis 9, wobei die ersten (21) und zweiten (22) wärmeleitenden Flansche eine Wärmeleitfähigkeit von mehr als 30 W·m⁻¹·K⁻¹ aufweisen und die wärmeleitende und durch ein Wärmeträgerfluid (23) thermoregulierte Form eine Wärmeleitfähigkeit von mehr als 30 W·m⁻¹·K⁻¹ aufweist.

11. Verfahren zur Herstellung eines thermoplastischen Verbundwerkstoffs nach einem der Ansprüche 1 bis 10, wobei die ersten (21) und zweiten (22) wärmeleitenden Flansche aus brüniertem Stahl, Aluminium oder aus duroplastischem Verbundwerkstoff bestehen.

12. Verfahren zur Herstellung eines thermoplastischen Verbundwerkstoffs nach einem der Ansprüche 1 bis 11, wobei die ersten (21) und zweiten (22) wärmeleitenden Flansche bewegliche Verbindungsmittel umfassen.

## Claims

1. A method for manufacturing thermoplastic composites (41) using a system (1) for manufacturing thermoplastic composites comprising:
- a molding apparatus (2) comprising a first thermo-conductive flange (21) and a second thermo-conductive flange (22), said first (21) and second (22) thermo-conductive flanges delimiting a cavity configured to receive thermoplastic pre-impregnated textiles (4), and a mold (23), thermo-conductive and thermo-regulated by a heat transfer fluid, comprising an upper imprint (24) and a lower imprint (25), said upper (24) and lower (25) imprints being configured to receive said first (21) and second (22) thermo-conductive flanges, and
- a press (3) comprising an upper press plate (31) on which the upper imprint (24) of the thermo-regulated and thermo-conductive mold (23) is fixed and a lower press plate (32) on which is fixed the lower imprint (25) of the thermo-regulated and thermo-conductive mold (23)
the method for manufacturing thermoplastic composites comprising the following steps:
A. Provision of thermoplastic pre-impregnated textiles (4) comprising fibers and a thermoplastic matrix,
B. Insertion of the thermoplastic pre-impregnated textiles (4) into first (21) and second (22) thermo-conductive flanges,
C. Transfer of the thermo-conductive flanges (21, 22) into a press (3) comprising a mold (23) which is thermo-conductive and thermo-regulated by a heat transfer fluid,
D. Preheating of the thermo-conductive flanges (21, 22) by means of the mold in said press,
E. Pressing of the thermo-conductive flanges (21, 22),
F. Transfer of the thermo-conductive flanges (21, 22) into an infrared oven (IR),
G. Heating of the thermo-conductive flanges (21, 22) under infrared to melt the thermoplastic matrix,
H. Transfer of the thermo-conductive flanges (21, 22) into a press (3) comprising a mold (23) which is thermo-conductive and thermo-regulated by a heat transfer fluid,
I. Cooling of the thermo-conductive flanges (21, 22) in said press (3),
J. Pressing of thermo-conductive flanges (21, 22) in said press (3),
K. Extraction of the thermo-conductive flanges (21, 22) from said press (3) and
L. Demolding of the thermoplastic composites (41).

2. The method for manufacturing thermoplastic composites according to claim 1, wherein in step D), the preheating of the mold (23) is carried out by convection or by conduction.

3. The method for manufacturing thermoplastic composites according to claim 1 or 2, wherein in step D), the preheating of the mold (23) is carried out at a temperature comprised between 50 and 150°C.

4. The method for manufacturing thermoplastic composites according to any one of claims 1 to 3, wherein in steps E) and/or J), the pressing is carried out at a pressure comprised between 10.10⁶ and 60.10⁶ Pa.

5. The method for manufacturing thermoplastic composites according to any one of claims 1 to 4, comprising a step M) carried out after step E) or J), including the vacuuming of the first and second (21, 22) thermo-conductive flanges.

6. The method for manufacturing thermoplastic composites according to claim 5, wherein a seal is inserted between said first (21) and second (22) thermo-conductive flanges.

7. The method for manufacturing thermoplastic composites according to any one of claims 1 to 6, wherein in step G), the first (21) and second (22) thermo-conductive flanges are heated to the melting temperature of the thermoplastic matrix of the thermoplastic pre-impregnated textiles (4).

8. The method for manufacturing thermoplastic composites according to any one of claims 1 to 7, wherein in step I), the first (21) and second (22) thermo-conductive flanges are cooled to a temperature at least 10°C lower than the glass transition temperature of the thermoplastic matrix.

9. The method for manufacturing thermoplastic composites according to any one of claims 1 to 8, wherein the thermoplastic pre-impregnated textiles (4) comprise electronic components based on inorganic compounds or organic compounds.

10. The method for manufacturing a thermoplastic composite according to any one of claims 1 to 9, wherein said first (21) and second (22) thermo-conductive flanges have a thermal conductivity greater than 30 W.m⁻¹.K⁻¹ and said mold (23), which is thermo-conductive and thermo-regulated by a heat transfer fluid, has a thermal conductivity greater than 30 W·m⁻¹·K⁻¹.

11. The method for manufacturing a thermoplastic composite according to any one of claims 1 to 10, wherein said first (21) and second (22) thermo-conductive flanges are made of burnished steel, aluminum or thermoset composite.

12. The method for manufacturing a thermoplastic composite according to any one of claims 1 to 11, wherein said first (21) and second (22) thermo-conductive flanges comprise removable assembly means.
